# EUROPÄISCHE PATENTSCHRIFT

(11) **EP 2 051 879 B1**
(45) Veröffentlichungstag und Bekanntmachung des Hinweises auf die Patenterteilung: **26.04.2017**
(21) Anmeldenummer: 07786540.0
(22) Anmeldetag: 03.08.2007
(51) Int. Cl.: B60R 16/02, H02J 7/14, H02J 7/34, H01G 11/06, H02J 7/00, H02J 7/04

(54) **VERFAHREN ZUR LEBENSDAUERVERLÄNGERUNG EINES WIEDERAUFLADBAREN ENERGIESPEICHERS**
METHOD FOR EXTENDING THE USEFUL LIFE OF A RECHARGEABLE ENERGY STORE
PROCÉDÉ POUR ALLONGER LA DURÉE DE VIE D'UN ACCUMULATEUR D'ÉNERGIE RECHARGEABLE

(30) Priorität: 17.08.2006 DE 102006038426
(43) Veröffentlichungstag der Anmeldung: 29.04.2009
(73) Patentinhaber: Bayerische Motoren Werke Aktiengesellschaft, 80809 München (DE)
(72) Erfinder: FRÖSCHL, Joachim, 82211 Herrsching (DE); CHRIST, Thomas, Dr., 48326 Anburn Hills (US); SCHARNER, Sebastian, Dr., 82299 Türkenfeld (DE)
(86) Internationale Anmeldenummer: PCT/EP2007/006871
(87) Internationale Veröffentlichungsnummer: WO 2008/019766

(56) Entgegenhaltungen:
- EP-A- 1 247 979
- WO-A-2007/012315
- DE-A1-102004 023 502
- DE-A1-102005 000 979
- US-A1- 2003 210 017

## Beschreibung

Die Erfindung betrifft ein Verfahren zur Lebensdauerverlängerung eines wiederaufladbaren Energiespeichers, wie insbesondere ein Doppelschichtkondensator, ein Li-Ion-Speicher oder ein NiMH-Speicher, der mehrere Speicherzellen aufweist, gemäß dem Oberbegriff des Anspruchs 1.

Wiederaufladbare Energiespeicher, wie insbesondere Doppelschichtkondensatoren, Li-Ion-Speicher und NiMH-Speicher, weisen in der Regel mehrere in Reihe geschaltete Speicherzellen auf. Aufgrund von Herstellungsschwankungen streuen deren physikalische Eigenschaften, was u.a. Auswirkungen auf deren Lebensdauer hat. So variieren an sich gleiche Speicherzellen beispielsweise im Hinblick auf ihre Speicherkapazität und ihren Innenwiderstand. Dies führt zu unterschiedlichen Erwärmungen bei gleicher Belastung. Es ist bekannt, dass die Lebensdauer einer Speicherzelle mit zunehmender Zellenspannung und zunehmender Temperatur jeweils abnimmt.

Die Veröffentlichung US 2003/0210017 A1 beschreibt die Entladung von Kondensatoren in Abhängigkeit sowohl von der Kondensatorspannung als auch der Temperatur von Kondensatorspeichermodulen.

Aufgabe der Erfindung ist die Angabe von Maßnahmen zur Verlängerung der Lebensdauer eines wiederaufladbaren Energiespeichers.

Diese Aufgabe wird durch die technischen Merkmale des unabhängigen Patentanspruchs 1 gelöst. Vorteilhafte Ausgestaltungen der Erfindung sind Gegenstand der abhängigen Patentansprüche.

Ein wesentlicher erster Aspekt der Erfindung besteht in dem Messen der Temperatur jeder der Speicherzellen. Falls die Temperatur einer Speicherzelle eine Referenztemperatur überschreitet, wird die Spannung der Speicherzelle durch eine gezielte geringfügige Entladung dieser Speicherzelle reduziert. Durch die gezielte Reduzierung der Spannung der Speicherzelle wird die durchschnittliche Lebensdauer der betreffenden Speicherzelle erhöht und der Reduzierung der durchschnittlichen Lebensdauer der Speicherzelle infolge von deren höherer Temperatur begegnet. Vorzugsweise wird die Spannung der betreffenden Speicherzelle gerade soweit reduziert, dass die damit einhergehende Verlängerung der Lebensdauer die Reduzierung der Lebensdauer infolge erhöhter Temperatur weitgehend kompensiert.

Ein wesentlicher zweiter Aspekt der Erfindung besteht in dem Messen der Kapazität jeder der Speicherzellen. Falls die Kapazität einer Speicherzelle einen Referenzwert für die Kapazität unterschreitet, wird die Spannung der Speicherzelle durch eine gezielte geringfügige Entladung dieser Speicherzelle reduziert. Durch die gezielte Reduzierung der Spannung der Speicherzelle wird die durchschnittliche Lebensdauer der betreffenden Speicherzelle erhöht und der Reduzierung der durchschnittlichen Lebensdauer der Speicherzelle infolge von deren geringerer Kapazität begegnet. Vorzugsweise wird die Spannung der betreffenden Speicherzelle gerade soweit reduziert, dass die damit einhergehende Verlängerung der Lebensdauer die Reduzierung der Lebensdauer infolge zu geringer Kapazität weitgehend kompensiert.

Es versteht sich, dass mehrere Speicherzellen zu einem Speichermodul zusammengeschaltet sein können, wobei dann mehrere Speichermodule den wiederaufladbaren Energiespeicher bilden.

Durch die erfindungsgemäßen Maßnahmen, für sich oder in Kombination, lässt sich die Lebensdauer des wiederaufladbaren Energiespeichers deutlich erhöhen. Die Lebensdauer von in Serie geschalteten Speicherzellen ist durch diejenige Speicherzelle bestimmt, deren Lebensdauer am kürzesten ist. Die Lebensdauer des Energiespeichers lässt sich damit am wirkungsvollsten dadurch verlängern, indem die an sich verkürzte Lebensdauer dieser Speicherzelle im Falle einer zu hohen Betriebstemperatur und/oder im Falle einer zu geringen Kapazität durch die Reduzierung der Betriebsspannung der Speicherzelle erhöht wird.

Von besonderem Vorteil ist, dass auch der Alterung der Speicherzellen durch die Erfindung begegnet wird. Infolge Alterung im jahrelangen Betrieb kann der Innenwiderstand einzelner Speicherzellen signifikant ansteigen und/oder deren Kapazität deutlich absinken, wodurch die Betriebstemperatur ansteigt. Ohne Gegenmaßnahmen beschleunigt sich die Alterung dieser Speicherzellen sogar und es kommt zum Totalausfall des wiederaufladbaren Energiespeichers, falls die betreffende Speicherzelle, die Teil einer Serienschaltung ist, ausfällt.

Es ist vorgesehen, dass diejenige Speicherzelle der Speicherzellen teilweise entladen wird, deren Temperatur am höchsten von allen Speicherzellen ist. Ergänzend ist vorgesehen, dass diejenige Speicherzelle der Speicherzellen teilweise entladen wird, deren Kapazität am geringsten von allen Speicherzellen ist. Hierdurch wird ein selektiver Eingriff beim Hauptverursacher oder bei den Hauptverursachern einer Lebensdauerverkürzung ermöglicht.

Bei einer Ausgestaltung der Erfindung ist vorgesehen, dass die Spannungen, die minimal und/oder die maximal an derjenigen Speicherzelle auftreten können, deren Temperatur zu hoch und/oder deren Kapazität zu niedrig ist, vorgegeben werden. Hierdurch kann einer zusätzlichen Gefährdung der betroffenen Speicherzelle infolge einer für die Speicherzelle zu hohen Spannung oder einer zu niedrigen Spannung mit dem Risiko eines Umpolens der Speicherzelle wirksam begegnet werden.

Bei einer anderen Ausgestaltung der Erfindung ist vorgesehen, dass die vorgegebene minimale Spannung und/oder die vorgegebene maximale Spannung der betreffenden Speicherzelle von den Spannungen abweichen, die einer anderen Speicherzelle, die weder eine zu hohe Temperatur noch eine zu geringe Kapazität hat, vorgegeben werden. Hierdurch kann die untere bzw. minimale und/oder die obere maximale vorgegebene Spannung der Leistungsfähigkeit der betreffenden Speicherzelle angepasst und die Lebensdauer zusätzlich verlängert werden.

Es ist an jeder der Speicherzellen eine Entladungs-Einrichtung vorgesehen, insbesondere für eine Entladung gegen Masse, die die aktuelle elektrische Spannung sowie die minimale und die maximale Spannung während des Betriebs der Speicherzelle bestimmt.

Um das Maß der Einflussnahme auf die Spannung einer betroffenen Speicherzelle zu illustrieren, sei beim folgenden ersten Beispiel angenommen, dass eine Speicherzelle eines Doppelschichtkondensators, wie insbesondere ein Supercap, eine Temperatur hat, die 10° C über der Referenztemperatur liegt. Dieser negativen Auswirkung auf die Lebensdauer der Speicherzelle kann begegnet werden, indem die Spannung dieser Speicherzelle um ca. 0,1 Volt durch die Entladungs-Einrichtung reduziert wird. Zur Reduzierung der Spannung führt die Entladungs-Einrichtung elektrische Ladung von der Speicherzelle, insbesondere gegen Masse, ab.

Um das Maß der Einflussnahme auf die Spannung einer betroffenen Speicherzelle zu illustrieren, sei beim folgenden zweiten Beispiel angenommen, dass eine Speicherzelle eines Doppelschichtkondensators, wie insbesondere ein Supercap, eine Kapazität hat, die 50 Farad unter der Referenzkapazität von 600 Farad liegt. Dieser negativen Auswirkung auf die Lebensdauer der Speicherzelle kann begegnet werden, indem die Spannung dieser Speicherzelle um ca. 0,04 Volt durch die Entladungs-Einrichtung reduziert wird. Zur Reduzierung der Spannung führt die Entladungs-Einrichtung elektrische Ladung von der Speicherzelle, insbesondere gegen Masse, ab.

Damit der wiederaufladbare Energiespeicher insgesamt wieder die gleiche Spannung wie vor der Entladung der betroffenen Speicherzelle aufweist, ist bei einer Ausführungsform der Erfindung vorgesehen, dass dem Energiespeicher insgesamt elektrische Ladung zugeführt wird, so dass dessen Spannung wieder auf den Wert vor der Entladung steigt. Handelt es sich beispielsweise um sechs in Reihe geschaltete Speicherzellen, die den Energiespeicher bilden, erhöht sich die Spannung jeder Speicherzelle dann um 1/6 der Spannung, um die die Spannung der betroffenen Speicherzelle reduziert worden ist. Da die Spannungsdifferenz auf alle Speicherzellen gleich verteilt wird, führt dies zu einer Gleichverteilung der Alterung auf die Speicherzellen. Dies verhindert letztendlich, dass die schwächste Zelle noch weiter und schneller geschwächt wird.

Bei einer Ausgestaltung der Erfindung wird im Falle eines Ausfalls der Temperatur- und/oder Kapazitätsmessung jeweils ein entsprechender Notlaufwert als Referenzwert vorgegeben.

Das erfindungsgemäße Verfahren ermöglicht die Realisierung eines Systems zur Spannungsversorgung eines Kraftfahrzeugs oder von einer seiner Komponenten.

## Patentansprüche

1. Verfahren zur Lebensdauerverlängerung eines wiederaufladbaren Energiespeichers zur Verwendung in einem Kraftfahrzeug, wie insbesondere ein Doppelschichtkondensator, ein Li-Ion-Speicher oder ein NiMH-Speicher, der mehrere Speicherzellen aufweiset, wobei an jeder der Speicherzellen eine Entladungs-Einrichtung vorgesehen ist, insbesondere für eine Entladung gegen Masse, die die aktuelle elektrische Spannung sowie die minimale und die maximale Spannung während des Betriebs der Speicherzelle bestimmt, **gekennzeichnet durch** die folgenden Schritte:
- Messen der Temperatur jeder der Speicherzellen,
- überschreitet die Temperatur einer Speicherzelle einen Referenzwert für die Temperatur der Speicherzelle, wird die Speicherzelle teilweise entladen und **dadurch** deren Spannung reduziert, und
- diejenige Speicherzelle der Speicherzellen teilweise entladen wird, deren Temperatur am höchsten von allen Speicherzellen ist.

2. Verfahren zur Lebensdauerverlängerung eines wiederaufladbaren Energiespeichers, nach Anspruch 1, insbesondere ein Doppelschichtkondensator, ein Lilon-Speicher oder ein NiMH-Speicher, der mehrere Speicherzellen aufweist, mit den folgenden Schritten:
- Messen der Kapazität jeder der Speicherzellen,
- unterschreitet die Kapazität einer Speicherzelle einen Referenzwert für die Kapazität der Speicherzelle, wird die Speicherzelle teilweise entladen und dadurch deren Spannung reduziert, wobei insbesondere
- diejenige Speicherzelle der Speicherzellen teilweise entladen wird, deren Kapazität am geringsten von allen Speicherzellen ist.

3. Verfahren nach einem der vorstehenden Ansprüche, **dadurch gekennzeichnet, dass** die Spannungen, die minimal und/oder die maximal an derjenigen Speicherzelle auftreten können, deren Temperatur zu hoch und/oder deren Kapazität zu niedrig ist, vorgegeben werden.

4. Verfahren nach Anspruch 3, **dadurch gekennzeichnet, dass** die vorgegebene minimale Spannung und/oder die vorgegebene maximale Spannung der betreffenden Speicherzelle von den Spannungen abweichen, die einer anderen Speicherzelle, die weder eine zu hohe Temperatur noch eine zu geringe Kapazität hat, vorgegeben werden.

## Claims

1. A method for extending the useful life of a rechargeable energy store for use in a motor vehicle, such as more especially a double-layer capacitor, an Li-ion store or an NiMH store, which has a plurality of storage cells, wherein provided at each of the storage cells is a discharge means, more especially for a discharge to earth, which discharge means determines the ongoing electrical voltage as well as the minimum voltage and maximum voltage during the operation of the storage cell, **characterised by** the following steps:
- measuring the temperature of each of the storage cells,
- if the temperature of a storage cells exceeds a reference value for the temperature of the storage cell, the storage cell is partly discharged and the voltage thereof is reduced thereby, and
- the storage cell of the storage cells, the temperature of which is the highest of all the storage cells, is partly discharged.

2. A method for extending the useful life of a rechargeable energy store according to claim 1, more especially a double-layer capacitor, an Li-ion store or an NiMH store, which has a plurality of storage cells, the method having the following steps:
- measuring the capacity of each of the storage cells,
- if the capacity of a storage cell falls below a reference value for the capacity of the storage cell, the storage cell is partly discharged, and the voltage thereof is reduced thereby, wherein more especially
- the storage cell of the storage cells, the capacity of which is the lowest of all the storage cells, is partly discharged.

3. A method according to any of the preceding claims, **characterised in that** the voltages which can occur minimally and/or maximally at the storage cell, the temperature of which is too high and/or the capacity of which is too low, are predetermined.

4. A method according to claim 3, **characterised in that** the predetermined minimum voltage and/or the predetermined maximum voltage of the relevant storage cell differ from the voltages which are predetermined at another storage cell which does not have a temperature which is too high or a capacity which is too low.

## Revendications

1. Procédé permettant d'augmenter la durée de vie d'un accumulateur d'énergie rechargeable destiné à être utilisé dans un véhicule, tel qu'en particulier, un condensateur à double couche, un accumulateur lithium-ion ou un accumulateur NiMH qui comporte plusieurs cellules d'accumulation, selon lequel sur chacune des cellules d'accumulation il est prévu un dispositif de décharge, en particulier pour permettre une décharge à la masse qui détermine la tension électrique actuelle ainsi que la tension minimum et la tension maximum pendant le fonctionnement de la cellule d'accumulation,
**caractérisé en ce qu'**
il comporte les étapes suivantes consistant à :
- mesurer la température de chacune des cellules d'accumulation,
- si à température de l'une des cellules d'accumulation dépasse une valeur de référence de la température de cette cellule d'accumulation, décharger partiellement celle-ci et ainsi réduire sa tension, et
- décharger partiellement la cellule d'accumulation dont la température est la plus élevée parmi toutes les cellules d'accumulation.

2. Procédé permettant d'augmenter la durée de vie d'un accumulateur d'énergie rechargeable conforme à la revendication 1,
en particulier un condensateur à double couche, un accumulateur lithium-ion ou un accumulateur NiMH qui comprend plusieurs cellules d'accumulation comprenant les étapes suivantes consistant à :
- mesurer la capacité de chacune des cellules d'accumulation,
- si la capacité de l'une des cellules d'accumulation passe au-dessous d'une valeur de référence de la capacité de cette cellule d'accumulation, décharger partiellement celle-ci et réduire ainsi sa tension, et, le cas échéant,
- décharger partiellement la cellule d'accumulation dont la capacité est la plus faible parmi toutes les cellules d'accumulation.

3. Procédé conforme à l'une des revendications précédentes, **caractérisé en ce que**
les tensions minimum et/ou maximum pouvant être appliquées à chaque cellule d'accumulation dont la température est trop élevée et/ou la capacité est trop faible sont prédéfinies.

4. Procédé conforme à la revendication 3,
**caractérisé en ce que**
la tension minimum prédéfinie et/ou la tension maximum prédéfinie de la cellule d'accumulation concernée s'écarte(nt) des tensions qui sont prédéfinies pour une autre cellule d'accumulation qui n'a ni une température trop élevée, ni une capacité trop faible.
